# EUROPÄISCHE PATENTSCHRIFT

(11) **EP 3 374 652 B1**
(45) Veröffentlichungstag und Bekanntmachung des Hinweises auf die Patenterteilung: **15.07.2020**
(21) Anmeldenummer: 16741935.7
(22) Anmeldetag: 22.07.2016
(51) Int. Cl.: F16D 13/64, F16D 13/74

(54) **LAMELLE FÜR EIN KRAFTSCHLÜSSIGES SCHALTELEMENT**
LAMELLA FOR A FRICTIONAL SHIFT ELEMENT
DISQUE POUR ÉLÉMENT DE CHANGEMENT DE VITESSE À FRICTION

(30) Priorität: 09.11.2015 DE 102015221932
(43) Veröffentlichungstag der Anmeldung: 19.09.2018
(73) Patentinhaber: ZF Friedrichshafen AG, 88046 Friedrichshafen (DE)
(72) Erfinder: LANGENKAEMPER, Derk, 88131 Lindau (DE); GERTEISER, Steffen, 88097 Eriskirch (DE); SCHMIDT, Stefan, 88048 Friedrichshafen (DE)
(74) Vertreter: ZF Friedrichshafen AG
(86) Internationale Anmeldenummer: PCT/EP2016/067478
(87) Internationale Veröffentlichungsnummer: WO 2017/080689

(56) Entgegenhaltungen:
- DE-A1-102012 014 811
- DE-A1-102013 226 393
- JP-U- S5 515 424
- US-A- 3 249 189
- US-A1- 2004 074 731
- US-A1- 2007 000 747
- US-A1- 2015 354 649

## Beschreibung

Die Erfindung betrifft eine Lamelle für ein kraftschlüssiges Schaltelement. Die Erfindung betrifft ferner ein kraftschlüssiges Schaltelement mit einer solchen Lamelle, sowie ein Getriebe für ein Kraftfahrzeug mit einem solchen kraftschlüssigen Schaltelement.

Die internationale Anmeldung WO 2009/021569 A1 beschreibt ein Reibteil für eine reibschlüssig arbeitende Einrichtung mit einer ringförmigen Reibflache, die einen Innenrand und einen Außenrand aufweist, wobei in der Reibflache eine umlaufende erste Nut, die sich zickzack- oder wellenförmig zwischen radial innenliegenden und radial außenliegenden Umlenkpunkten erstreckt, mehrere zweite Nuten, die sich ausgehend von dem Innenrand zu den innenliegenden Umlenkpunkten erstrecken, und mehrere dritte Nuten vorgesehen sind, die sich ausgehend von dem Außenrand im Wesentlichen in radialer Richtung in die umlaufende erste Nut erstrecken und an Einmündungspunkten in die umlaufende erste Nut münden. Die zweiten Nuten erstrecken sich dabei entlang einer Radialen des Reibteils.

Wird einem solchen drehenden Reibteil als Bestandteil eines kraftschlüssigen Schaltelements, also einer Lamellenkupplung oder einer Lamellenbremse, Kühlöl von radial außen zu den dritten Nuten zugeführt, so fließt das Öl von den dritten Nuten in die umlaufende erste Nut. Ein überwiegender Anteil des Öls wird durch die Fliehkräfte über die dritten Nuten wieder ausgeschleudert, ohne in die zweiten Nuten einzudringen. Dies führt zu einer über den Radius der Reibfläche ungleich verteilten Kühlwirkung, sodass der radial äußere Bereich der Reibfläche erheblich besser gekühlt wird als der radial innere Bereich der Reibfläche. Dies ist unerwünscht.

Die Offenlegungsschrift DE 10 2013 226 393 A1 beschreibt eine Reibscheibe für eine Kupplungseinrichtung, bevorzugt für die Anwendung im Antriebsstrang eines Kraftfahrzeugs.

Es ist daher Aufgabe der Erfindung ein Nutbild für eine Lamelle anzugeben, welches bei einer Kühlölzuführung von radial außen eine verbesserte Kühlung des radial inneren Bereichs der Reibfläche ermöglicht.

Die Aufgabe wird gelöst durch die Merkmale des Patentanspruchs 1. Vorteilhafte Ausgestaltungen ergeben sich aus den Unteransprüchen, der Beschreibung sowie aus den Figuren.

Erfindungsgemäß wird das im Stand der Technik bekannte Nutbild derart modifiziert, dass die Ausrichtung zumindest jenes Abschnitts der zweiten Nuten, welcher an den radial innenliegenden Umlenkpunkten mündet, und eine Linie zwischen einem Dreh-Mittelpunkt der Lamelle und dem der jeweiligen zweiten Nut zugeordneten Umlenkpunkt einen Winkel zwischen 35 und 75 Grad einschließt, vorzugsweise einen Winkel zwischen 45 und 65 Grad. In anderen Worten verlaufen die zweiten Nuten gegenüber dem Stand der Technik nun nicht mehr in radialer Richtung, sondern schräg dazu. Bei Drehung der Lamelle um ihre Achse verläuft eine durch die umlaufende erste Nut fließende Kühlflüssigkeit entlang der ersten Nut. An den innenliegenden Umlenkpunkten erfolgt aufgrund der nun schräg angeordneten zweiten Nuten eine Strömungsaufteilung, wobei ein Teil der Kühlflüssigkeit weiter entlang der umlaufenden ersten Nut strömt, und der verbleibende Teil in die zweite Nut strömt. Dadurch erfolgt eine im Vergleich zum Stand der Technik verbesserte Kühlung des radialen Innenbereichs der Reibfläche.

Vorzugsweise sind die zweiten Nuten geradlinig ausgebildet. Dadurch ist der Strömungsverlust der Kühlflüssigkeit durch die zweiten Nuten gering, wodurch die Kühlwirkung des radialen Innenbereichs der Reibfläche weiter verbessert wird.

Bevorzugt erstrecken sich die zweiten Nuten ausgehend von den radialen innenliegenden Umlenkpunkten jeweils paarweise zum Innenrand der Reibfläche. Dadurch ist die verbesserte Kühlwirkung des radialen Innenbereichs der Reibfläche unabhängig von der Drehrichtung der Lamelle erzielbar.

Bei einer paarweisen Ausgestaltung der zweiten Nuten schließt vorzugsweise jede Nut eines Nutenpaares den gleichen Winkel zur Linie zwischen dem Dreh-Mittelpunkt der Lamelle und dem Nutenpaar zugeordneten Umlenkpunkt ein. Dadurch wird eine gleichmäßige Kühlwirkung unabhängig von der Drehrichtung der Lamelle erzielt.

Die dritten Nuten erstrecken sich im Wesentlichen in radialer Richtung vom Außenrand der Lamelle zu den Einmündungspunkten in die umlaufende erste Nut. Unter dem Begriff "im Wesentlichen" wird eine Ausrichtung der dritten Nuten verstanden, welche maximal 10 Grad, bevorzugt maximal 5 Grad von der Radialrichtung der Lamelle abweicht. Diese Abweichung kann in beide Richtungen erfolgen, also plus 10 Grad oder minus 10 Grad. Die Abweichung von der Radialrichtung kann keine, alle, oder nur einen Teil der dritten Nuten betreffen. Eine derartige im Wesentlichen radiale Ausrichtung der dritten Nuten begünstigt ein Eindringen von Öl ausgehend vom Außenrand der Lamelle hin zur umlaufenden ersten Nut, und zwar unabhängig von der Drehrichtung der Lamelle.

Weicht die Ausrichtung der dritten Nuten von der Radialrichtung ab, so ist die Ausrichtungs-Abweichung von zueinander benachbarten dritten Nuten vorzugsweise gegengleich. Beträgt die Ausrichtungs-Abweichung einer dritten Nut beispielsweise plus 5 Grad, so beträgt die Ausrichtungs-Abweichung einer zu dieser dritten Nut unmittelbar benachbarten dritten Nut minus 5 Grad.

Erfindungsgemäß ist das Nutbild symmetrisch ausgebildet und auf einen Dreh-Mittelpunkt zentriert, sodass bei der Montage der Lamelle keine Rücksicht auf die Einbaurichtung zu nehmen ist.

Vorzugsweise ist die Lamelle als Belaglamelle ausgebildet. Eine Belaglamelle weist üblicherweise einen ringförmigen Stahlkörper auf. Auf den Stirnseiten des Stahlkörpers sind Belagkörper angebracht. Die vom Stahlkörper abgewandte Oberfläche der Belagkörper bildet die Reibfläche der Lamelle. Die Nuten der Lamelle können entweder durch Nuten in den Belagkörpern gebildet sein, oder durch Aussparungen zwischen den Belagkörpern. Die erfindungsgemäße Ausgestaltung der Nuten erlaubt dabei eine Beschränkung auf lediglich vier verschiedenartige Belagkörperformen. Somit kann die Lamelle trotz dem gegenüber dem Stand der Technik komplexeren Nutbild ohne vergrößerten Aufwand hergestellt werden.

Erfindungsgemäß sind die Einmündungspunkte der dritten Nuten zwischen den Umlenkpunkten der umlaufenden ersten Nut angeordnet.

Vorzugsweise ist die Breite der umlaufenden ersten Nut, der zweiten Nuten sowie der dritten Nuten gleich. Gemäß einer alternativen Ausgestaltung ist die Breite der zweiten Nuten größer als die Breite der umlaufenden ersten Nut. Dadurch wird der Strömungswiderstand der zweiten Nuten im Vergleich zum Strömungswiderstand der umlaufenden ersten Nut reduziert, sodass ein Eindringen des Öls von radial Außen zum Innenrand der Lamelle hin begünstigt wird.

Die erfindungsgemäße Lamelle kann Bestandteil eines kraftschlüssigen Schaltelements sein, beispielsweise einer Lamellenkupplung oder einer Lamellenbremse. Dabei sind mehrere Außenlamellen und mehrere Innenlamellen in axialer Richtung alternierend hintereinander angeordnet. Die Außenlamellen sind mit einem Außenlamellenträger drehfest und axial verschieblich verbunden. Die Innenlamellen sind mit einem Innenlamellenträger drehfest und axial verschieblich verbunden. Die erfindungsgemäßen Lamellen bilden entweder die Innenlamellen oder die Außenlamellen. Das kraftschlüssige Schaltelement weist dabei eine Vorrichtung auf, welche zur Zuleitung von Flüssigkeit von radial außen zum Außenrand der erfindungsgemäßen Lamellen hin ausgebildet ist. Das derart ausgebildete kraftschlüssige Schaltelement kann Bestandteil eines Getriebes für ein Kraftfahrzeug sein. Dabei wirkt das kraftschlüssige Schaltelement als Anfahrelement im Kraftfahrzeug-Antriebsstrang. Ein solches Anfahrelement ermöglicht einen Schlupfzustand zwischen der Antriebsquelle und den Antriebsrädern des Kraftfahrzeugs während des Anfahrvorgangs. Dabei kann es besonders bei einem Anfahrvorgang mit hoher Last, beispielsweise bergauf und mit beladenem Kraftfahrzeug-Anhänger zu einem hohen Energieeintrag in das Anfahrelement kommen. Durch die verbesserte, über den Radius der Reibfläche gleichmäßigere Kühlwirkung ist das kraftschlüssige Schaltelement besonders für die Anwendung als Anfahrelement geeignet.

Ein Ausführungsbeispiel der Erfindung ist nachfolgend anhand der beigefügten Figuren detailliert beschrieben. Es zeigen:
Fig. 1 eine stirnseitige Ansicht einer erfindungsgemäßen Lamelle;
Fig. 2 einen vergrößerten Ausschnitt der stirnseitigen Ansicht;
Fig. 3 einen Ausschnitt einer isometrischen Ansicht der erfindungsgemäßen Lamelle;
Fig. 4 eine stirnseitige Ansicht einer zweiten Ausführungsform der erfindungsgemäßen Lamelle;
Fig. 5 einen vergrößerten Ausschnitt der stirnseitigen Ansicht von Fig. 4;
Fig. 6 bis 9 stirnseitige Ansichten von Nutbildern alternativer Ausführungsformen der erfindungsgemäßen Lamelle;
Fig. 10 eine Schnittansicht eines kraftschlüssigen Schaltelements; und
Fig. 11 eine schematische Darstellung eines Getriebes für ein Kraftfahrzeug.

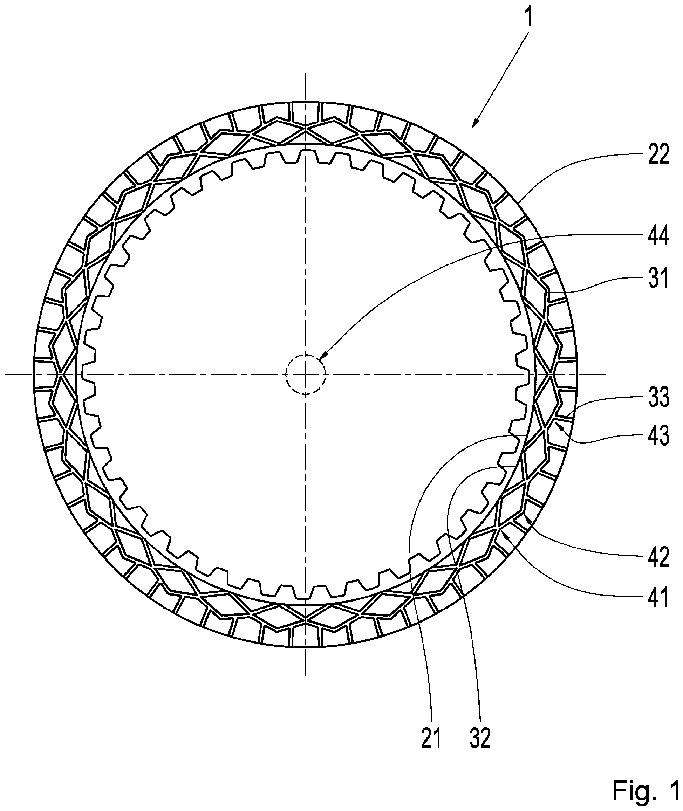

Fig. 1 zeigt eine stirnseitige Ansicht einer Lamelle 1, angeordnet um einen Drehmittelpunkt 44 der Lamelle 1. Die Lamelle 1 weist eine ringförmige Reibfläche auf, die einen Innenrand 21 und einen Außenrand 22 aufweist. In der Reibfläche ist ein symmetrisches Nutbild vorgesehen, bestehend aus einer umlaufenden ersten Nut 31, mehreren zweiten Nuten 32 und mehreren dritten Nuten 33. Die erste Nut 31 erstreckt sich zick-zack oder wellenförmig zwischen radial innenliegenden Umlenkpunkten 41 und radial außenliegenden Umlenkpunkten 42 in Umfangsrichtung der Lamelle 1. Die zweiten Nuten 32 erstrecken sich jeweils paarweise ausgehend vom Innenrand 21 zu den radial innenliegenden Umlenkpunkten 41. Die dritten Nuten 33 erstrecken sich ausgehend vom Außenrand 22 in die umlaufende erste Nut 31, und sind in radialer Richtung ausgerichtet. Mündungspunkte 43 der dritten Nuten 33 in die umlaufende erste Nut 31 befinden sich zwischen den Umlenkpunkten 41, 42.

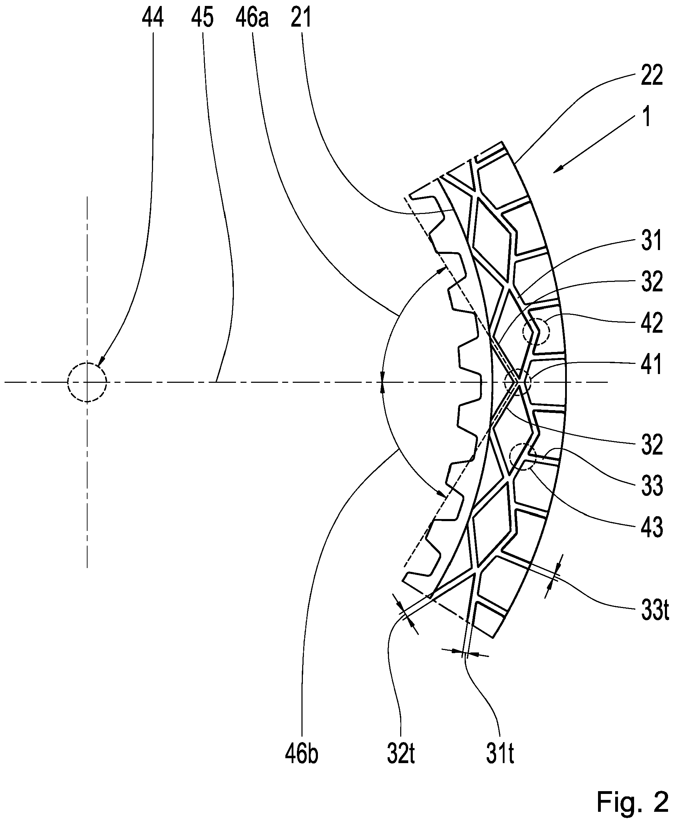

In Fig. 2 ist ein vergrößerter Ausschnitt der in Fig. 1 abgebildeten stirnseitigen Ansicht dargestellt. Die zweiten Nuten 32 sind im Wesentlichen geradlinig ausgebildet. Der Winkel 46a, 46b jeder der zweiten Nuten 32 zu einer Linie 45, welche zwischen dem Drehmittelpunkt 44 und dem der Nut 32 zugeordneten Umlenkpunkt 41 verläuft, beträgt zwischen 35 und 75 Grad, im dargestellten Ausführungsbeispiel etwa 55 Grad. Die Breite 31t der ersten Nut 31, die Breite 32t der zweiten Nuten 32 sowie die Breite 33t der dritten Nuten 33 sind gleich.

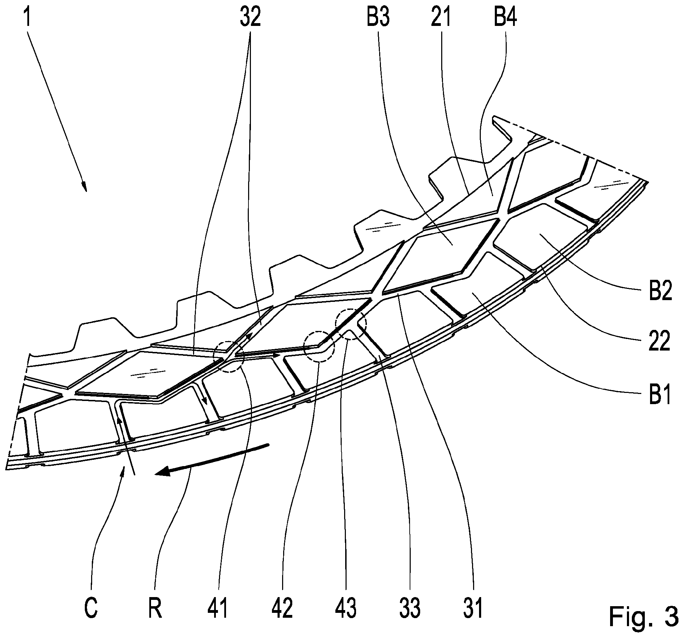

Fig. 3 zeigt einen Ausschnitt einer isometrischen Ansicht der Lamelle 1, worin die erfindungsgemäße Wirkungsweise gut erkennbar ist. Ein Kühlölstrom C tritt ausgehend vom Außenrand 22 in die dritten Nuten 33 ein. Bei gegebener Rotationsrichtung R der Lamelle 1 fließt der Kühlölstrom C bezogen auf die Lamelle 1 entgegen der Rotationsrichtung R durch die umlaufende erste Nut 31. Aufgrund der Fliehkraft tritt ein Teil des Kühlölstroms C bei der in Umfangsrichtung folgenden dritten Nut 33 wieder aus, während der verbleibende Teil des Kühlstroms C weiter durch die umlaufende erste Nut 31 strömt. Der Kühlölstrom C trifft nun auf einen der innenliegenden Umlenkpunkte 41. Durch die erfindungsgemäße Ausrichtung der zweiten Nuten 32 erfolgt eine Aufteilung des Kühlölstroms C zwischen der ersten Nut 31 und der ausgehend vom Umlenkpunkt 41 entgegen der Drehrichtung R ausgerichteten zweiten Nut 32. Ist die Drehrichtung R der Lamelle 1 stets die gleiche, so genügt eine einzige Nut 32 ausgehend von jedem Umlenkpunkt 32 zum Innenrand 21, wobei diese Nuten 32 entgegen der Drehrichtung R auszurichten sind. Soll die verbesserte Kühlfunktion der Lamelle 1 unabhängig von der Drehrichtung R erfolgen, so ist die paarweise Ausbildung der zweiten Nuten 32 zu bevorzugen, so wie im Ausführungsbeispiel dargestellt.

In Fig. 3 ist zudem gut erkennbar, dass es sich bei der Lamelle 1 um eine Belaglamelle handelt. Die Nuten 31, 32, 33 sind durch Aussparungen zwischen den Belagkörpern ausgebildet. Die Lamelle 1 weist dabei genau vier verschiedenartige Belagkörperformen B1, B2, B3, B4 auf.

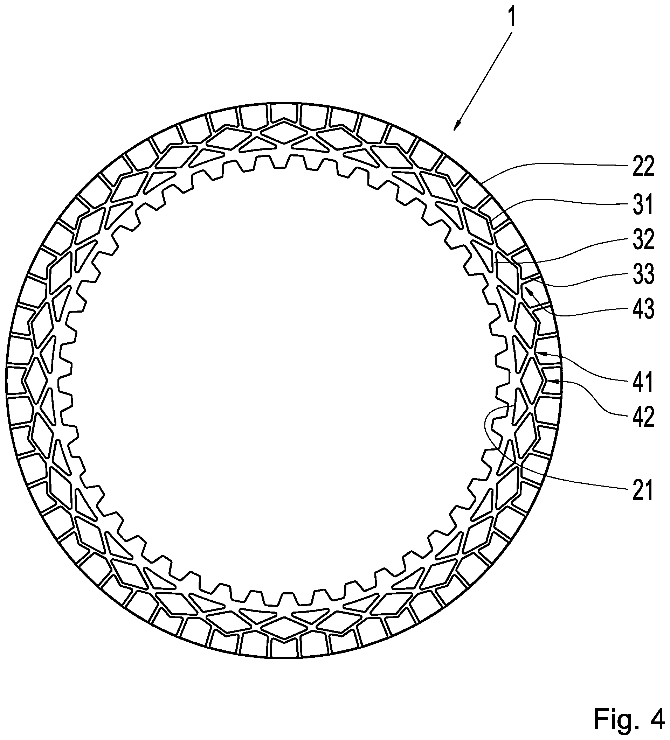

Fig. 4 zeigt eine stirnseitige Ansicht einer zweiten Ausführungsform der erfindungsgemäßen Lamelle 1, welche im Wesentlichen der in Fig. 1 dargestellten Ausführungsform entspricht. Die rautenförmigen Belagkörper wurden dabei radial weiter außen angeordnet, wodurch die dritten Nuten 33 nun eine größere Breite aufweisen als die umlaufende erste Nut.

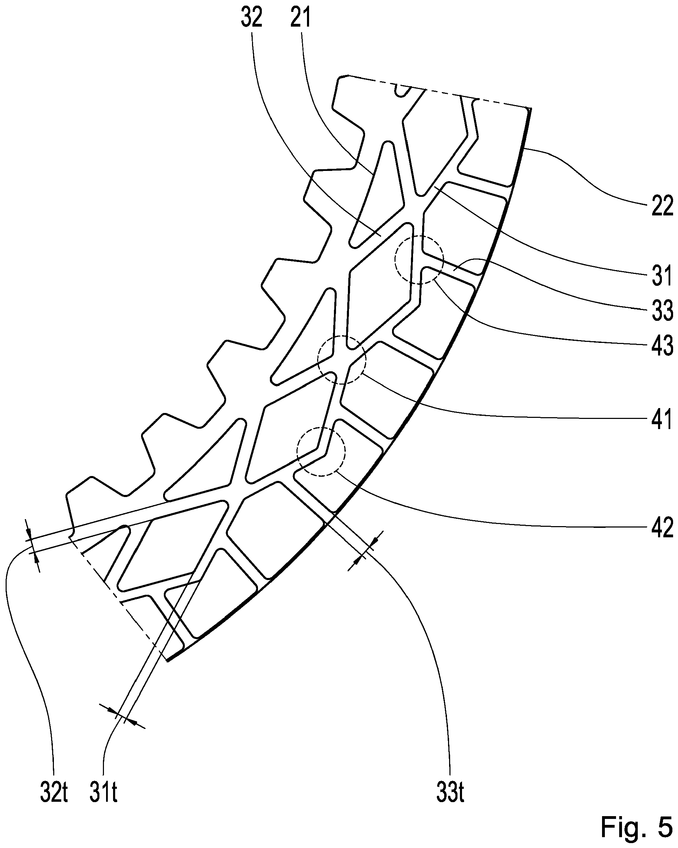

Fig. 5 zeigt eine Detailansicht der Lamelle 1 gemäß der zweiten Ausführungsform. Darin ist die vergrößerte Breite 32t der zweiten Nuten 32 im Vergleich zur nun kleineren Breite 31t der umlaufenden ersten Nut 31 gut erkennbar. Die Breite 33t der dritten Nuten 33 ist unverändert.

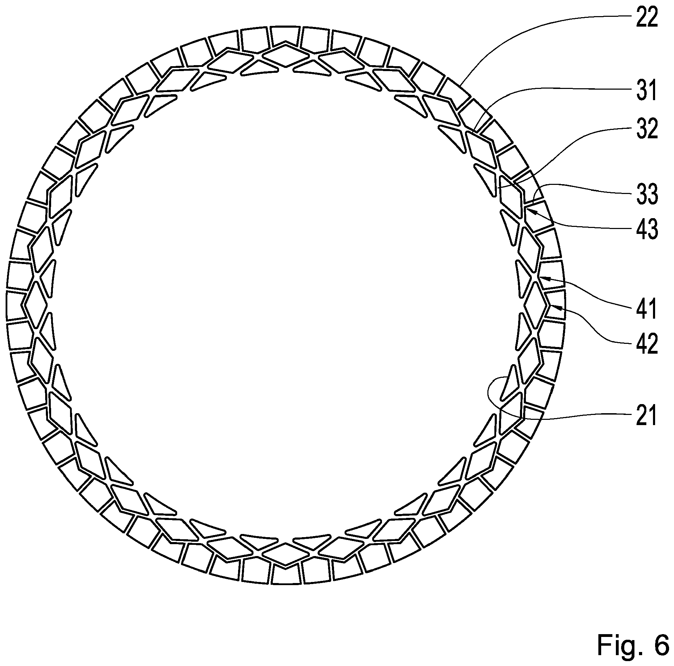

Fig. 6 zeigt ein Nutbild einer erfindungsgemäßen Lamelle 1, welches im Wesentlichen der in Fig. 4 dargestellten zweiten Ausführungsform entspricht. Lediglich die Ausrichtung der dritten Nuten 33 wurde verändert, sodass diese um 5 Grad von der Radialrichtung der Lamelle 1 abweicht. Die Abweichung zueinander benachbarter dritter Nuten 33 ist dabei gegengleich ausgerichtet, sodass ein symmetrisches Nutbild entsteht.

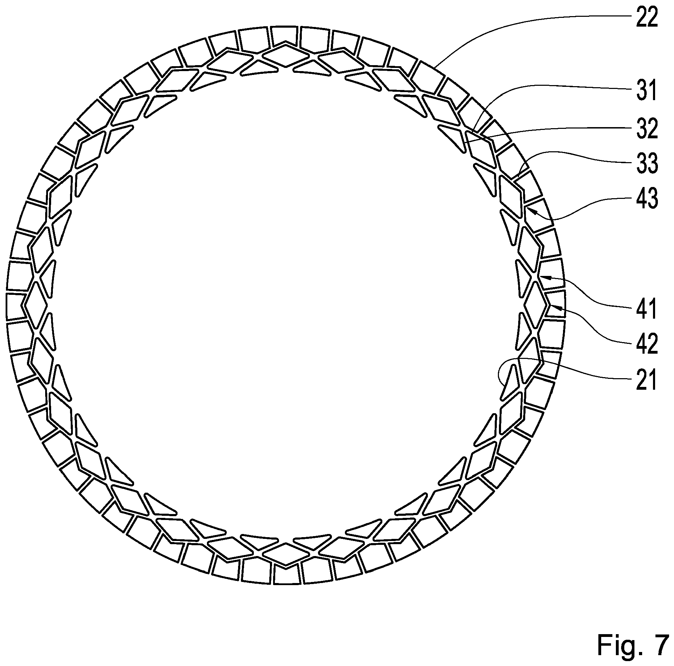

Fig. 7 zeigt ebenso ein Nutbild einer erfindungsgemäßen Lamelle 1 mit von der Radialrichtung der Lamelle 1 abweichenden Ausrichtung der dritten Nuten 33. Die Abweichung zueinander benachbarter dritter Nuten 33 ist erneut gegengleich ausgerichtet, sodass ein symmetrisches Nutbild entsteht. Im Vergleich zum in Fig. 6 dargestellten Nutbild wurde die Winkelausrichtung verändert, sodass die den innenliegenden Umlenkpunkten 41 zugeordneten Belagkörper breiter sind als in der Ausführung gemäß Fig. 6.

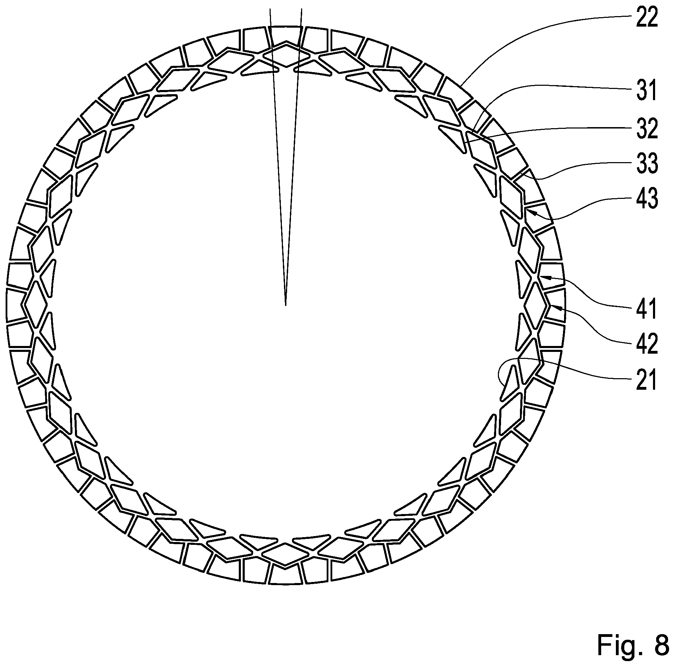

Fig. 8 zeigt ein Nutbild einer erfindungsgemäßen Lamelle 1 mit von der Radialrichtung der Lamelle 1 abweichenden Ausrichtung der dritten Nuten 33. Die Winkelausrichtung entspricht dem Nutbild gemäß Fig. 6, jedoch mit einem Winkel von 10 Grad ausgehend von der Radialrichtung der Lamelle 1.

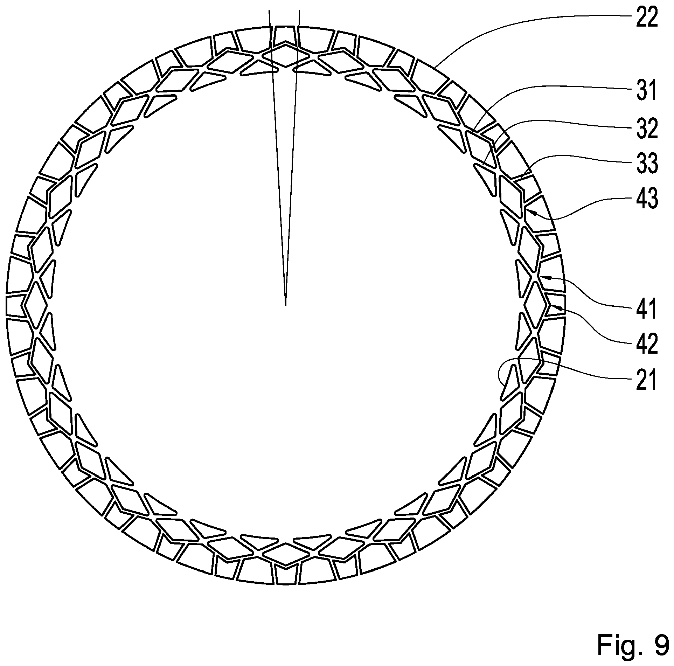

Fig. 9 zeigt ebenso ein Nutbild einer erfindungsgemäßen Lamelle 1 mit von der Radialrichtung der Lamelle 1 abweichenden Ausrichtung der dritten Nuten 33. Die Winkelausrichtung entspricht dem Nutbild gemäß Fig. 7, jedoch mit einem Winkel von 10 Grad ausgehend von der Radialrichtung der Lamelle 1.

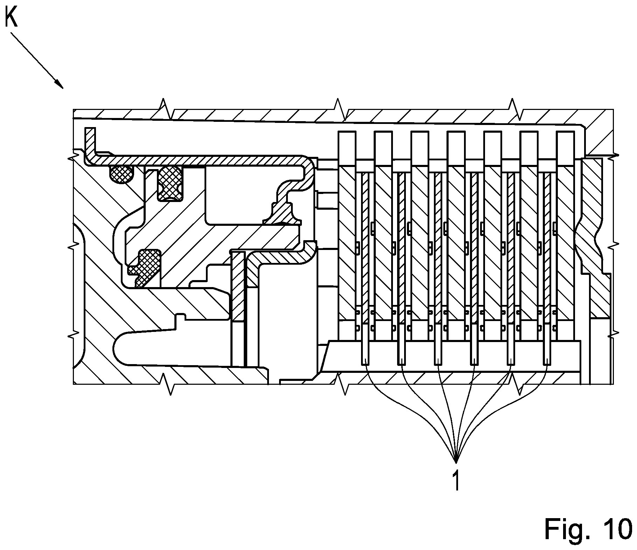

Fig. 10 zeigt eine Schnittansicht eines kraftschlüssigen Schaltelements K, in welchem die erfindungsgemäßen Lamellen 1 als Innenlamellen ausgebildet sind. Das kraftschlüssige Schaltelement K wirkt beispielhaft als Bremse. Die Innenlamellen sind axial hintereinander und alternierend mit Außenlamellen angeordnet. Die Außenlamellen sind als Stahllamellen ausgebildet. Das kraftschlüssige Schaltelement K weist eine Vorrichtung zum Zuleiten von Flüssigkeit auf, beispielsweise Kühlöl. Die Flüssigkeit wird von radial außen zu dem Lamellenpaket zugeführt. Dadurch kann den Innenlamellen 1 von radial außen Flüssigkeit zugeführt werden.

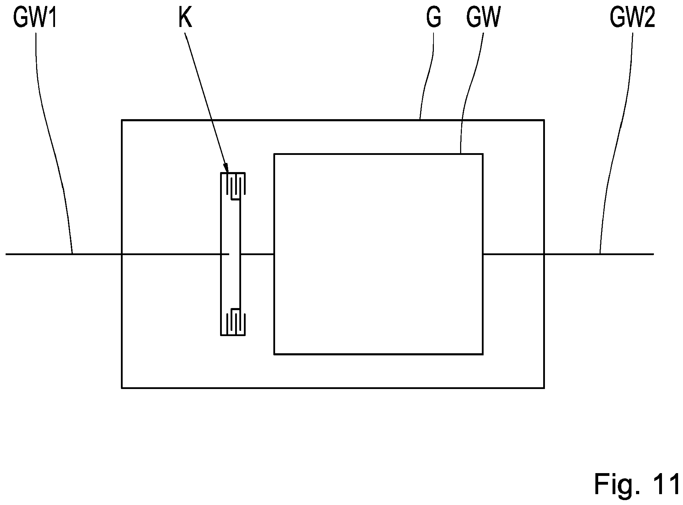

Fig. 11 zeigt eine schematische Darstellung eines Getriebes G für ein Kraftfahrzeug. Das Getriebe G weist eine Eingangswelle GW1, eine Ausgangswelle GW2 sowie einen Gangwechselabschnitt GW auf. Die Eingangswelle GW1 dient als Schnittstelle zu einer getriebeexternen Antriebseinheit, beispielsweise einer Verbrennungskraftmaschine des Fahrzeugs. Die Ausgangswelle GW2 dient als Schnittstelle zu einem Achsgetriebe des Fahrzeugs, über welches die an der Ausgangswelle GW2 anliegende Leistung auf Antriebsräder des Fahrzeugs verteilt wird. Der Gangwechselabschnitt GW ist dazu eingerichtet verschiedene Übersetzungsverhältnisse zwischen der Eingangswelle GW1 und der Ausgangswelle GW2 darzustellen. Zwischen der Eingangswelle GW1 und dem Gangwechselabschnitt GW ist das kraftschlüssige Schaltelement K angeordnet. Durch das kraftschlüssige Schaltelement K ist ein Schlupfzustand zwischen der Eingangswelle GW1 und der Ausgangswelle GW2 darstellbar, beispielsweise bei einem Anfahrvorgang des Kraftfahrzeugs. Das kraftschlüssige Schaltelement K kann auch Bestandteil des Gangwechselabschnitts GW sein.

### Bezugszeichen

- 1: Lamelle
- 21: Innenrand
- 22: Außenrand
- 31: Erste Nut
- 31t: Breite der ersten Nut
- 32: Zweite Nuten
- 32t: Breite der zweiten Nuten
- 33: Dritte Nuten
- 33t: Breite der dritten Nuten
- 41: Radial innenliegende Umlenkpunkte
- 42: Radial außenliegende Umlenkpunkte
- 43: Einmündungspunkte
- 44: Drehmittelpunkt
- 45: Linie
- 46a/b: Winkel
- R: Drehrichtung
- C: Kühlölstrom
- B1: Belagkörperform
- B2: Belagkörperform
- B3: Belagkörperform
- B4: Belagkörperform
- K: Kraftschlüssiges Schaltelement
- G: Getriebe
- GW1: Eingangswelle
- GW2: Ausgangswelle
- GW: Gangwechselabschnitt

## Patentansprüche

1. Lamelle (1) für ein kraftschlüssiges Schaltelement, mit einer ringförmigen Reibfläche, die einen Innenrand (21) und einen Außenrand (22) aufweist, wobei in der Reibfläche eine umlaufende erste Nut (31), mehrere zweite Nuten (32) sowie mehrere dritte Nuten (33) vorgesehen sind,
- wobei die erste Nut (31) sich zickzack- oder wellenförmig zwischen radial innenliegenden und radial außenliegenden Umlenkpunkten (41, 42) erstreckt,
- wobei die zweiten Nuten (32) sich ausgehend von dem Innenrand (21) zu den radial innenliegenden Umlenkpunkten (41) erstrecken,
- wobei die dritten Nuten (33) sich ausgehend von dem Außenrand (22) auf gerader Linie in die umlaufende erste Nut (31) erstrecken und an Einmündungspunkten (43) in die umlaufende erste Nut (31) münden,
- wobei die dritten Nuten (33) ausgehend von den Einmündungspunkten (43) im Wesentlichen in radialer Richtung zum Außenrand (22) hin ausgerichtet sind,
- wobei das von den ersten, zweiten und dritten Nuten (31, 32, 33) gebildete Nutbild symmetrisch ausgebildet und auf einen Dreh-Mittelpunkt (44) der Lamelle (1) zentriert ist,
- wobei die Ausrichtung zumindest jenes Abschnitts der zweiten Nuten (32), welcher an den radial innenliegenden Umlenkpunkten (41) mündet, und eine Linie (45) zwischen dem Dreh-Mittelpunkt (44) der Lamelle (1) und dem der jeweiligen zweiten Nut (32) zugeordneten Umlenkpunkt (41) einen Winkel (46a) zwischen 35 und 75 Grad einschließt,
**dadurch gekennzeichnet, dass** die Einmündungspunkte (43) zwischen den Umlenkpunkten (42) der ersten Nut (31) angeordnet sind.

2. Lamelle (1) nach Anspruch 1, **dadurch gekennzeichnet, dass** die Ausrichtung zumindest jenes Abschnitts der zweiten Nuten (32), welcher an den radial innenliegenden Umlenkpunkten (41) mündet, und die Linie (45) einen Winkel (46a) zwischen 45 und 65 Grad einschließt.

3. Lamelle (1) nach Anspruch 1 oder Anspruch 2, **dadurch gekennzeichnet, dass** die zweiten Nuten (32) geradlinig ausgebildet sind.

4. Lamelle (1) nach einem der Ansprüche 1 bis 3, **dadurch gekennzeichnet, dass** sich zwei zweite Nuten (32) ausgehend von den radial innenliegenden Umlenkpunkten (41) zum Innenrand (21) hin erstrecken.

5. Lamelle (1) nach Anspruch 4, **dadurch gekennzeichnet, dass** die Ausrichtung zumindest jener Abschnitte eines Paares der zweiten Nuten (32), welche an einem der radial innenliegenden Umlenkpunkte (41) münden, den gleichen Winkel (46a, 46b) zur Linie (45) einschließen.

6. Lamelle (1) nach einem der Ansprüche 1 bis 4, **dadurch gekennzeichnet, dass** die Ausrichtung der dritten Nuten (33) maximal 10 Grad von der Radialrichtung der Lamelle (1) abweicht.

7. Lamelle (1) nach Anspruch 6, **dadurch gekennzeichnet, dass** die Ausrichtungs-Abweichung von der Radialrichtung der Lamelle (1) von zueinander benachbarten dritten Nuten (33) gegengleich ist.

8. Lamelle (1) nach einem der vorangehenden Ansprüche, **dadurch gekennzeichnet, dass** die Lamelle (1) als Belaglamelle ausgebildet ist, wobei die Belaglamelle genau vier verschiedenartige Belagkörperformen (B1, B2, B3, B4) aufweist.

9. Lamelle (1) nach einem der Ansprüche 1 bis 8, **dadurch gekennzeichnet, dass** die Breite der ersten Nut (31), der zweiten Nuten (32) und der dritten Nuten (33) gleich sind.

10. Lamelle (1) nach einem der Ansprüche 1 bis 8, **dadurch gekennzeichnet, dass** die Breite der zweiten Nuten (32) größer ist als die Breite der ersten Nut (31).

11. Kraftschlüssiges Schaltelement (K) mit mehreren Lamellen (1) nach einem der Ansprüche 1 bis 10, **dadurch gekennzeichnet, dass** das Schaltelement (K) eine Vorrichtung zum Zuleiten von Flüssigkeit zum Außenrand (22) der Lamellen (1) aufweist.

12. Getriebe (G) für ein Kraftfahrzeug mit einem kraftschlüssigen Schaltelement (K) nach Anspruch 11, **dadurch gekennzeichnet, dass** das kraftschlüssige Schaltelement (K) als Anfahrelement des Kraftfahrzeugs wirkt.

## Claims

1. Lamella (1) for a frictional shift element, having an annular friction surface which has an inner edge (21) and an outer edge (22), wherein a peripheral first groove (31), a plurality of second grooves (32) and a plurality of third grooves (33) are provided in the friction surface,
- wherein the first groove (31) extends in a zig-zag or wavy shape between radially inner and radially outer deflection points (41, 42),
- wherein the second grooves (32) extend to the radially inner deflection point (41) starting from the inner edge (21),
- wherein the third grooves (33) extend into the peripheral first groove (31) starting from the outer edge (22) in a straight line and open at inlet points (43) into the peripheral first groove (31),
- wherein the third grooves (33) are oriented substantially in the radial direction towards the outer edge (22) starting from the inlet points (43),
- wherein the groove pattern formed by the first, second and third grooves (31, 32, 33) is designed to be symmetrical and is centred on a rotation centre point (44) of the lamella (1),
- wherein the orientation of at least that portion of the second grooves (32) which opens at the radially inner deflection points (41), and a line (45) between the rotation centre point (44) of the lamella (1) and the deflection point (41) assigned to the respective second groove (32), encloses an angle (46a) between 35 and 75 degrees,
**characterized in that** the inlet points (43) are arranged between the deflection points (42) of the first groove (31).

2. Lamella (1) according to Claim 1, **characterized in that** the orientation of at least that portion of the second grooves (32) which opens at the radially inner deflection points (41), and the line (45), encloses an angle (46a) between 45 and 65 degrees.

3. Lamella (1) according to Claim 1 or Claim 2, **characterized in that** the second grooves (32) are designed to be rectilinear.

4. Lamella (1) according to one of Claims 1 to 3, **characterized in that** two second grooves (32) extend towards the inner edge (21) starting from the radially inner deflection points (41).

5. Lamella (1) according to Claim 4, **characterized in that** the orientation of at least those portions of a pair of the set of grooves (32) which open at one of the radially inner deflection points (41) enclose the same angle (46a, 46b) to the line (45).

6. Lamella (1) according to one of Claims 1 to 4, **characterized in that** the orientation of the third grooves (33) deviates by at most 10 degrees from the radial direction of the lamella (1).

7. Lamella (1) according to Claim 6, **characterized in that** the orientation deviation from the radial direction of the lamella (1) of mutually adjacent third grooves (33) is diametrically opposed.

8. Lamella (1) according to one of the preceding claims, **characterized in that** the lamella (1) is designed as a lining lamella, wherein the lining lamella has exactly four different lining body shapes (B1, B2, B3, B4).

9. Lamella (1) according to one of Claims 1 to 8, **characterized in that** the widths of the first groove (31), the second grooves (32) and the third grooves (33) are identical.

10. Lamella (1) according to one of Claims 1 to 8, **characterized in that** the width of the second grooves (32) is greater than the width of the first groove (31) .

11. Frictional shift element (K) having a plurality of lamellae (1) according to one of Claims 1 to 10, **characterized in that** the shift element (K) has a device for supplying liquid to the outer edge (22) of the lamellae (1).

12. Transmission (G) for a motor vehicle having a frictional shift element (K) according to Claim 11, **characterized in that** the frictional shift element (K) acts as a starting element of the motor vehicle.

## Revendications

1. Disque (1) destiné à un élément de commutation en force, ledit disque comprenant une surface de friction annulaire qui comporte un bord intérieur (21) et un bord extérieur (22), une première rainure circonférentielle (31), une pluralité de deuxièmes rainures (32) et une pluralité de troisièmes rainures (33) étant ménagées dans la surface de friction,
- la première rainure (31) s'étendant en zigzag ou de manière ondulée entre des points de déviation radialement intérieurs et radialement extérieurs (41, 42),
- les deuxièmes rainures (32) s'étendant du bord intérieur (21) à des points de déviation radialement intérieurs (41),
- les troisièmes rainures (33) s'étendant en ligne droite du bord extérieur (22) jusque dans la première rainure circonférentielle (31) et débouchant dans la première rainure circonférentielle (31) au niveau de points de jonction (43),
- les troisièmes rainures (33) étant orientées sensiblement radialement des points de jonction (43) au bord extérieur (22),
- le motif de rainures formé par les première, deuxièmes et troisièmes rainures (31, 32, 33) étant symétrique et centré sur un centre de rotation (44) du disque (1),
- l'orientation d'au moins la partie des deuxièmes rainures (32) qui débouche au niveau des points de déviation radialement intérieurs (41) et une ligne (45) située entre le centre de rotation (44) du disque (1) et le point de déviation (41) associé à la deuxième rainure respective (32) formant un angle (46a) compris entre 35 et 75 degrés,
**caractérisé en ce que** les points de jonction (43) sont disposés entre les points de déviation (42) de la première rainure (31).

2. Disque (1) selon la revendication 1, **caractérisé en ce que** l'orientation d'au moins la partie des deuxièmes rainures (32) qui débouche au niveau des points de déviation radialement intérieurs (41) et la ligne (45) forment un angle (46a) compris entre 45 et 65 degrés.

3. Disque (1) selon la revendication 1 ou la revendication 2, **caractérisé en ce que** les deuxièmes rainures (32) sont conçues pour être rectilignes.

4. Disque (1) selon l'une des revendications 1 à 3, **caractérisé en ce que** deux deuxièmes rainures (32) s'étendent des points de déviation radialement intérieurs (41) au bord intérieur (21).

5. Disque (1) selon la revendication 4, **caractérisé en ce que** l'orientation d'au moins les parties d'une paire de deuxièmes rainures (32) qui débouchent au niveau de l'un des points de déviation radialement intérieurs (41), forme avec la ligne (45) le même angle (46a, 46b).

6. Disque (1) selon l'une des revendications 1 à 4, **caractérisé en ce que** l'orientation des troisièmes rainures (33) s'écarte d'un maximum de 10 degrés de la direction radiale du disque (1).

7. Disque (1) selon la revendication 6, **caractérisé en ce que** l'orientation des troisièmes rainures mutuellement adjacentes (33) s'écarte de la direction radiale du disque (1) de manière diamétralement opposée.

8. Disque (1) selon l'une des revendications précédentes, **caractérisé en ce que** le disque (1) est conçu comme un disque à garniture, le disque à garniture comportant exactement quatre types différents de corps de garniture (B1, B2, B3, B4).

9. Disque (1) selon l'une des revendications 1 à 8, **caractérisé en ce que** la première rainure (31), les deuxièmes rainures (32) et les troisièmes rainures (33) ont la même largeur.

10. Disque (1) selon l'une des revendications 1 à 8, **caractérisé en ce que** la largeur des deuxièmes rainures (32) est supérieure à la largeur de la première rainure (31) .

11. Élément de commutation en force (K) comprenant une pluralité de disques (1) selon l'une des revendications 1 à 10, **caractérisé en ce que** l'élément de commutation (K) comporte un dispositif d'alimentation du bord extérieur (22) des disques (1) en liquide.

12. Boîte de vitesses (G) destinée à un véhicule automobile, ladite boîte de vitesses comprenant un élément de commutation en force (K) selon la revendication 11, **caractérisée en ce que** l'élément de commutation en force (K) agit comme un élément de démarrage du véhicule automobile.
